# EUROPÄISCHE PATENTSCHRIFT

(11) **EP 1 798 067 B1**
(45) Veröffentlichungstag und Bekanntmachung des Hinweises auf die Patenterteilung: **11.01.2012**
(21) Anmeldenummer: 06123331.8
(22) Anmeldetag: 02.11.2006
(51) Int. Cl.: B60C 11/13, B60C 11/03, B60C 11/12

(54) **Laufflächenprofil**
Tread pattern
Dessin de la bande de roulement

(30) Priorität: 16.12.2005 DE 102005060724
(43) Veröffentlichungstag der Anmeldung: 20.06.2007
(73) Patentinhaber: Continental Reifen Deutschland GmbH, 30165 Hannover (DE)
(72) Erfinder: Schlittenhard, Jan, 30900, Wedemark (DE); Frehisse, Bernard, 30163, Hannover (DE); Stange, Mathias, 30449, Hannover (DE); Heine, Stefan, 30163, Hannover (DE)
(74) Vertreter: Finger, Karsten

(56) Entgegenhaltungen:
- EP-A1- 0 609 195
- EP-A1- 0 908 330
- JP-A- 7 017 216
- JP-A- 9 142 105
- JP-A- 2003 063 212
- JP-A- 2004 058 838

## Beschreibung

Die Erfindung betrifft ein Laufflächenprofil eines Fahrzeugreifens - insbesondere eines Fahrzeugluftreifens - mit zwei benachbarten durch eine Profilrille voneinander beabstandeten radial erhabenen Profilelementen mit längs der Erstreckungsrichtung der die erhabenen Profilelemente trennenden Profilrille in Richtung quer zur Profilrille unterschiedlich ausgebildeter Quersteifigkeitsverteilung eines ersten der beiden Profilelemente mit wenigstens einem ersten Abschnitt des Erstreckungsbereichs des Profilelements längs der Erstreckungsrichtung der Profilrille und mit wenigstens einem zweiten Abschnitt des Erstreckungsbereichs des Profilelements längs der Erstreckungsrichtung der Profilrille, wobei die Quersteifigkeit des Profilelements im ersten Abschnitt geringer ist als im zweiten Abschnitt.

Bei Fahrzeugreifen mit Laufflächenprofil mit mehreren Profilblockreihen wurde bereits vorgeschlagen zur Beeinflussung der Quersteifigkeit der Profilblockreihen die gesamte Profilblockreihe mit in axialer Richtung des Fahrzeugluftreifens unterschiedlichen und somit asymmetrischen Flankenwinkeln auszubilden. Ebenso wurde bereits vorgeschlagen die Schulterprofilblockreihen und weitere Profilblockreihen des Laufstreifenprofils mit unterschiedlichen Flankenwinkeln auszubilden. Mit diesen Maßnahmen kann die Quersteifigkeit über die axiale Erstreckung des Fahrzeugreifens beeinflusst werden. Diese Maßnahmen führen zur definierten Erhöhung der Quersteifigkeiten von gesamten Profilblockreihen und können somit zur Verbesserung von Handlingeigenschaften führen.

Die individuelle Gestaltung der einzelnen Profilblockelemente findet hierbei jedoch keine ausreichende Berücksichtigung. Die einzelnen Profilblockelemente sind zwar insgesamt hierdurch hinsichtlich ihrer Quersteifigkeit steifer gestaltbar. Die Steifigkeitsunterschiede innerhalb eines Profilblockelementes werden hierdurch jedoch kaum beeinflusst. Abriebsunterschiede aufgrund solcher blockspezifischen Steifigkeitsunterschiede. Unterschiedlicher Abrieb innerhalb von Profilblockelementen kann wiederum langfristig während der Lebensdauer des Fahrzeugreifens beispielsweise zu unterschiedlichem Griff zumindest auf nasser Straße und auch zu reduzierten Handlingeigenschaften führen,

Vorgeschlagen wurde bei derartigen Laufstreifenprofilen auch bereits der Rillengrund einer Profilrille zwischen zwei durch die Profilrille getrennten Profilblockelementen über die gesamte Erstreckung zwischen den beiden Profilblockelementen anzuheben, so dass eine deutliche Versteifung zwischen den Profilblockelementen ermöglicht wird. Hierdurch können die Handlingeigenschaften verbessert werden. Die steife Kopplung zwischen den Profilblockelementen sorgt jedoch dafür, dass der Ausgleich von Schubspannungen während des Abplattens des Fahrzeugluftreifens beim Durchlaufen des Latsches erschwert wird, wodurch ebenfalls der Abrieb der Profilblockelemente und des Fahrzeugreifens negativ beeinflusst wird. Die individuelle Gestaltung der einzelnen Profilblockelemente findet auch hierbei keine ausreichende Berücksichtigung. Die über die Profilrille hinweg benachbarten Profilblockelemente sind zwar gegeneinander versteift. Die Steifigkeitsunterschiede innerhalb eines Profilblockelementes werden hierdurch jedoch kaum beeinflusst. Abriebsunterschiede aufgrund solcher blockspezifischen Steifigkeitsunterschiede. Unterschiedlicher Abrieb innerhalb von Profilblockelementen kann wiederum langfristig während der Lebensdauer des Fahrzeugreifens beispielsweise zu unterschiedlichem Griff zumindest auf nasser Straße und auch zu reduzierten Handlingeigenschaften führen.

Aus der EP 0 609 195 A1 ist es bekannt, benachbarte Profilblockelemente durch eine Rille voneinander zu trennen, die längs ihrer Erstreckung zwischen den beiden benachbarten Profilblockelementen einen Abschnitt größerer Breite und einen Erstreckungsabschnitt kleinerer Breite aufweist. Das benachbarte Profilblockelement ist in dem Erstreckungsabschnitt größerer Rillenbreite hierdurch schmaler ausgebildet als in dem Erstreckungsabschnitt kleinerer Rillenbreite. In einer Ausführung ist die Rillentiefe im Erstreckungsabschnitt geringerer Rillenbreite geringer ausgebildet als in dem Erstreckungsabschnitt größerer Rillentiefe.

Aus der EP 0908330 A1 ist ferner ein Laufflüchenprofil bekannt, bei dem ein Stufenförmiger Absatz ausgehend von dem Profilblock in die Profilville Lunieningth. Der Erfindung liegt die Aufgabe zugrunde in einfacher Weise Abrieb- und Handlingseigenschaften eines Laufflächenprofil eines Fahrzeugreifens - insbesondere eines Fahrzeugluftreifens - mit zwei benachbarten durch eine Profilrille voneinander beabstandeten radial erhabenen Profilelementen mit längs der Erstreckungsrichtung der die erhabenen Profilelemente trennenden Profilrille in Richtung quer zur Profilrille unterschiedlich ausgebildeter Quersteifigkeitsverteilung eines ersten der beiden Profilelemente mit wenigstens einem ersten Abschnitt des Erstreckungsbereichs des Profilelements längs der Erstreckungsrichtung der Profilrille und mit wenigstens einem zweiten Abschnitt des Erstreckungsbereichs des Profilelements längs der Erstreckungsrichtung der Profilrille, wobei die Quersteifigkeit des Profilelements im ersten Abschnitt geringer ist als im zweiten Abschnitt, zu verbessern.

Erfindungsgemäß gelöst wird die Aufgabe durch die Ausbildung eines Laufflächenprofil eines Fahrzeugreifens - insbesondere eines Fahrzeugluftreifens - mit zwei benachbarten durch eine Profilrille voneinander beabstandeten radial erhabenen Profilelementen mit längs der Erstreckungsrichtung der die erhabenen Profilelemente trennenden Profilrille in Richtung quer zur Profilrille unterschiedlich ausgebildeter Quersteifigkeitsverteilung eines ersten der beiden Profilelemente mit wenigstens einem ersten Abschnitt des Erstreckungsbereichs des Profilelements längs der Erstreckungsrichtung der Profilrille und mit wenigstens einem zweiten Abschnitt des Erstreckungsbereichs des Profilelements längs der Erstreckungsrichtung der Profilrille, wobei die Quersteifigkeit des Profilelements im ersten Abschnitt geringer ist als im zweiten Abschnitt, gemäß den Merkmalen von Anspruch 1, wobei lediglich längs des ersten Abschnitts der beiden Abschnitte dieses ersten Profilelementes im radial inneren Erstreckungsbereich der Profilrille ein stufenförmiger Absatz ausgehend von dem ersten Profilelement quer zur Erstreckungsrichtung der Profilrille ausgebildet ist, der sich zur Versteifung in Richtung des zweiten Profilelementes in die Profilrille erstreckt und in einem Abstand a mit a > 0 vom zweiten Profilelement in der Profilrille endet. Hierdurch wird das Profilelement lediglich im Bereich geringerer zur Profilrille gerichteter Steifigkeit unter Aufrechterhaltung einer Entkopplung zum benachbarten Profilelement zusätzlich versteift, wodurch das Profilelement in seiner Steifigkeit unter Beibehaltung der Möglichkeit eines Ausgleichs der Schubspannungen beim Durchlaufen des Latsches vergleichmäßigt wird. Der Abrieb des einzelnen Profilelements wird vergleichmäßigt. Die Handlingeigenschaften können auch langfristig verbessert werden.

Der Abstand ermöglicht eine Profilrillenwirkung bis in den Profilgrund. Bei sehr schmalen Profilrillen kann die bei solchen Profilrillen vorhandene Gefahr des vollständigen Schließens der Profilrille während des Durchlaufens des Latsches weitgehend vermieden werden.

Besonders vorteilhaft ist die Ausbildung gemäß den Merkmalen von Anspruch 2, wobei die Profilrille eine Profilrille mit einer Haupterstreckungsrichtung ist, deren Richtungskomponente in Umfangsrichtung des Fahrzeugreifens größer als deren Richtungskomponente in axialer Richtung des Fahrzeugreifens ist. Dies ermöglicht besonders einfach eine gezielte Vergleichmäßigung der Lateralen Steifigkeit des Profilelements, eine Vergleichmäßigung des Abriebbildes und eine Verbesserung der Handlingeigenschaften des Fahrzeugreifens.

Besonders vorteilhaft ist die Ausbildung gemäß den Merkmalen von Anspruch 3, wobei wenigstens das erste erhabene Profilelement ein Profilblockelement ist. Profilblockelemente sind besonders anfällig für Auswirkungen von Steifigkeitsvariabilitäten. Die ausgleichende Versteifung wirkt sich besonders bei einer derartigen Ausbildung besonders stark aus.

Besonders vorteilhaft ist die Ausbildung gemäß den Merkmalen von Anspruch 4, wobei wenigstens das erste erhabene Profilelement ein Profilblockelement einer über den Umfang des Fahrzeugreifens erstreckten Profilblockreihe ist.

Besonders vorteilhaft ist die Ausbildung gemäß den Merkmalen von Anspruch 5, wobei die Profilrille eine über den Umfang des Fahrzeugreifens erstreckte Umfangsrille ist. Bei dieser Rillengestaltung lassen sich durch die Verwendung der Profilversteifungsstruktur besonders gut die lateralen Steifigkeitsunterschiede der Abschnitte der Erstreckung der Profilelemente längs der Erstreckungsrichtung der Profilrille ausgleichen.

Besonders vorteilhaft ist die Ausbildung gemäß den Merkmalen von Anspruch 6, das als Winterreifenprofil ausgebildet ist. Winterreifen habe üblicherweise eine weichere Laufflächenmischung als ein Sommer- oder Ganzjahresreifen. Außerdem weisen Winterreifen in ihren Profilelementen eine hohe Zahl von Feinschnitten auf. Beide Konstruktionsmerkmale ermöglichen eine hohe Kraftübertragung auf Oberflächen mit niedrigem Reibungsbeiwert (z.B. Eis und Schnee), bewirken jedoch auf der anderen Seite auch ein allgemeine Absenkung der Profilsteifigkeit, was sich im allgemeinen durch schlechtere Handlingeigenschaften bemerkbar macht. Somit ist es besonderes wichtig bei Winterreifen durch die Verwendung von Profilversteifungsstrukturen die unterschiedlichen lateralen Steifigkeiten der Profilelemente auszugleichen und somit die Handling- und Abriebseigenschaften zu verbessern.

Besonders vorteilhaft ist die Ausbildung gemäß den Merkmalen von Anspruch 7, wobei das erste - und insbesondere auch das zweite - erhabene Profilelement an seiner radial äußeren Oberfläche mit einem oder mehreren Feineinschnitten ausgebildet ist. Die Verwendung von Feineinschnitten in der Oberfläche der Profilelemente ermöglicht durch eine Ausbildung von Kanteneffekten eine bessere Verzahnung mit dem Untergrund, was die Wintereigenschaften aber auch das Nassbremsvermögen eines Fahrzeugreifens erhöht.

Besonders vorteilhaft ist die Ausbildung gemäß den Merkmalen von Anspruch 8, wobei sich der stufenförmige Absatz ausgehend vom Rillengrund nach radial außen bis in eine radiale Höhe h erstreckt, für die gilt: (0,1 tₘ) ≤ h ≤ (0,8 tₘ ), insbesondere (0,2 tₘ) ≤ h ≤ (0,5 tₘ), wobei tₘ die durchschnittlich radiale maximale Rillentiefe t längs der Erstreckung der Rille in deren Haupterstreckungsrichtung im Erstreckungsbereich der Profilrille außerhalb des ersten Abschnittes bei dem Fahrzeugreifen im montierten Normzustand nach E.T.R.T.O - Standard darstellt

Besonders vorteilhaft ist die Ausbildung gemäß den Merkmalen von Anspruch 9, wobei für a gilt: wobei für den Abstand a gilt: 0,3mm ≤ a ≤ 20mm, insbesondere 0,4mm < a < 7mm. Diese Ausführung weist besonders auch in Kombination mit der Versteifung durch einen stufenförmigen Absatz noch die zusätzlichen Vorteile auf, dass sich bei klein gewählten Entkoppelungseinschnitten a, im abgeplatteten Zustand des Reifens, die Profilelemente der benachbarten Profilblockelementen aneinander abstützen können, was die Handlingeigenschaften des Reifens verbessert, sowie ein Nutschließen beim Abplatten und bei weiterer Profilverformung durch Seitenkräfte sicherer verhindert.

Dies bewirkt, dass die Profilblockkanten weiter für eine Verzahnung mit dem Untergrund besonders auf winterlichen Straßenverhältnissen erhalten bleiben. Dies verbessert die Griffeigenschaften auf winterlichen Straßenoberflächen. Eine Profilversteifungsstruktur mit stufenförmigem Absatz ist dabei besonders bei schmaleren Nuten von Vorteil, wenn größere Steifigkeitsunterschiede zwischen den Profilelementen ausgeglichen werden müssen.

Besonders vorteilhaft ist die Ausbildung gemäß den Merkmalen von Anspruch 10, wobei der stufenförmige Absatz ausgehend von seiner nach radial außen gerichteten, ein Plateau bildenden Oberfläche rampenförmig in längs der Haupterstreckungsrichtung der Profilrille in den Rillengrund abfällt, wobei sich der stufenförmige Absatz auch längs des rampenförmig abfallenden Erstreckungsbereichs in Richtung des zweiten Profilelementes in die Profilrille erstreckt und in einem Abstand a mit a > 0 vom zweiten Profilelement in der Profilrille endet. Diese Ausbildung ermöglicht eine besonders gute Vergleichmäßigung der Lateralen Profilsteifigkeiten der verschiedenen Abschnitte längs der Rille.

Besonders vorteilhaft ist die Ausbildung gemäß den Merkmalen von Anspruch 11, wobei der stufenförmige Absatz ausgehend von seiner nach radial außen gerichteten, ein Plateau bildenden Oberfläche rampenförmig quer zur Haupterstreckungsrichtung der Profilrille in den Rillengrund abfällt, und in einem Abstand a mit a > 0 vom zweiten Profilelement in Grund der Profilrille endet. Besonders vorteilhaft ist diese Ausbildung bei breiteren Rillen, wenn die Steifigkeitsanstieg der Profilversteifungsstruktur kontinuierlich erfolgen soll und der freie Rillenquerschnitt zur Erhöhung der Aquaplaningsicherheit nicht zu stark eingeschränkt werden soll.

Besonders vorteilhaft ist die Ausbildung gemäß den Merkmalen von Anspruch 12, mit einem längs der Erstreckung des stufenförmigen Absatzes verändert ausgebildeten Abstand a zum zweiten Profilelement. Besonders vorteilhaft ist diese Ausbildung bei breiten Rillen neben lateral sehr steifen Blockelementen, die eine unterschiedliche axiale Erstreckung in Richtung TA aufweisen, wenn die Vergleichmäßigung der Lateralen Profilsteifigkeiten der verschiedenen Abschnitte längs der Rille erfolgen soll.

Die Erfindung wird im Folgenden an Hand der in den Figuren 1 bis 4 schematisch dargestellten Ausführungsbeispiele näher erläutert. Darin zeigen
- Fig. 1: Ausschnitt eines Laufflächenprofils eines Fahrzeugluftreifens in Draufsicht,
- Fig. 2: Querschnittdarstellung des Ausschnitts des Laufflächenprofils von Fig. 1 gemäß Schnitt II-II von Fig. 1,
- Fig. 3: Querschnittdarstellung des Ausschnitts des Laufflächenprofils von Fig. 1 gemäß Schnitt III-III von Fig. 1,

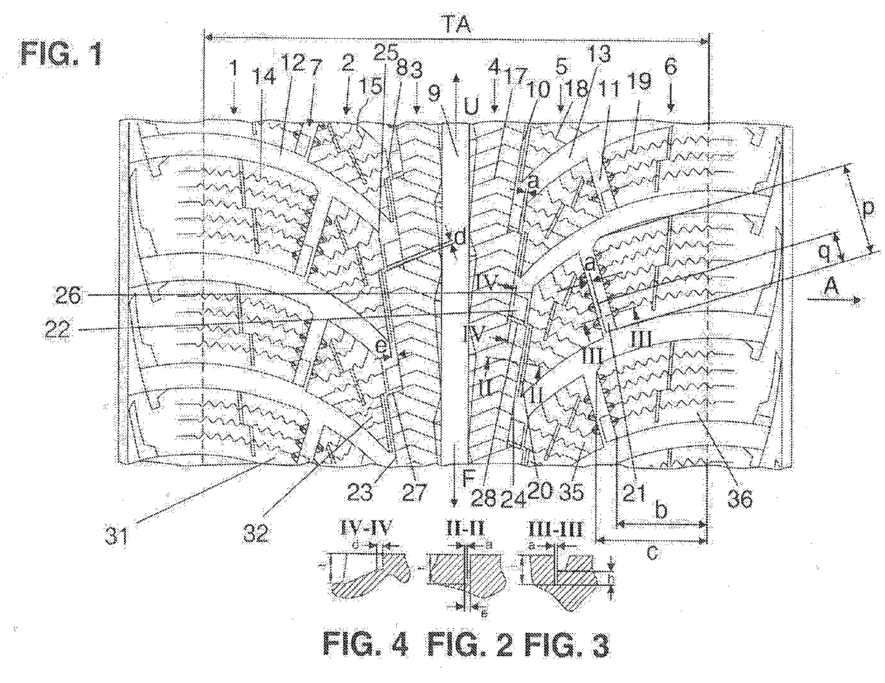

- Fig. 2: Querschnittdarstellung des Ausschnitts des Laufflächenprofils von Fig. 1 gemäß Schnitt IV-IV von Fig. 1.

Das in Fig. 1 dargestellte Laufstreifenprofil ist ein Laufstreifenprofil eines Fahrzeugluftreifen, der insbesondere als Radialreifen ausgeführt ist und vorzugsweise ein PKW-Reifen oder ein Reifen für leichte Nutzfahrzeuge ist. Das Laufstreifenprofil ist ein Laufstreifenprofil, welches für den Einsatz unter winterlichen Fahrbedingungen besonders geeignet ist. In der folgenden Beschreibung wird das Laufstreifenprofil über seine Breite TA betrachtet, die der Latschbreite und somit der Breite der Bodenaufstandsfläche des Fahrzeugluftreifens im montierten, belasteten Betriebszustand unter Normbedingungen (gemäß E.T.R.T.O. Standards) entspricht.

In Fig.1 ist die axiale Richtung A des Fahrzeugluftreifens mit Pfeildarstellung eingetragen. Ebenso ist die Umfangsrichtung U des Fahrzeugluftreifens mit Pfeildarstellung angegeben.

Das dargestellte Laufstreifenprofil ist ein laufrichtungsgebunden gestaltetes Profil. Das heißt, dass Reifen mit diesem Profil eine bevorzugte Abrollrichtung besitzen, die in Fig. 1 durch den Pfeil F angedeutet ist, der entgegen der in Fig. 1 mit Pfeil eingetragenen Umfangsrichtung U weist, und dass solche Reifen daher auch entsprechend ihrer Abrollrichtung am Fahrzeug zu montieren sind.

Das Laufstreifenprofil ist in der Darstellung von Fig. 1 in axialer Richtung von links nach rechts hintereinander angeordnet aus einer Schulterprofilblockreihe 1 einer Profilblockreihe 2, einer Profilrippe 3, einer Profilrippe 4, einer Profilblockreihe 5 und einer Schulterprofilblockreihe 6 ausgebildet, die jeweils in Umfangsrichtung U über den gesamten Umfang des Fahrzeugluftreifens erstreckt sind. Die Profilrippen 3 und 4 sind über den gesamten Umfang des Fahrzeugluftreifens erstreckte und axial voneinander durch eine über den gesamten Umfang erstreckte in Umfangsrichtung ausgerichtete Umfangsrille 9 getrennt ausgebildet. Im dargestellten Ausführungsbeispiel erstreckt sich die Äquatorebene des Reifens in der axialen Mitte der Umfangsrille 9.

Das dargestellte Laufflächenprofil ist symmetrisch zur Äquatorebene ausgebildet, wobei die in Fig. 1 rechts der Äquatorebene ausgebildete Reifenprofilhälfte durch Spiegelung der linken Reifenprofilhälfte an der Äquatorebene und durch anschließende Verschiebung in Umfangsrichtung U entsteht.

Die Schulterprofilblockreihe 1 ist aus mehreren in Umfangsrichtung U hintereinander angeordneten Profilblockelementen 31, die Profilblockreihe 2 aus mehreren in Umfangsrichtung U hintereinander angeordneten Profilblockelementen 32, die Profilblockreihe 5 aus mehreren in Umfangsrichtung U hintereinander angeordneten Profilblockelementen 35 und die Schulterprofilblockreihe 6 aus mehreren in Umfangsrichtung U hintereinander angeordneten Profilblockelementen 36 ausgebildet.

Ausgehend von der Profilrippe 3 erstrecken sich mehrere über den Umfang des Fahrzeugluftreifens verteilte in Umfangsrichtung U hintereinander angeordnete Querrillen 12, die sich jeweils axial ausgehend von der Profilrippe 3 nach axial außen über die axiale Erstreckung der Profilblockreihe 2 und die axiale Erstreckung der Schulterprofilblockreihe 1 bis in die linke Schulter hinein erstrecken. Dabei trennt jede der Querrillen 12 im Bereich der Profilblockreihe 2 jeweils zwei in Umfangsrichtung U hintereinander angeordnete Profilblockelemente 32 voneinander und im Bereich der Schulterprofilblockreihe 1 jeweils zwei in Umfangsrichtung U hintereinander angeordnete Profilblockelemente 31 voneinander. Ebenso erstrecken sich ausgehend von der Profilrippe 4 mehrere über den Umfang des Fahrzeugluftreifens verteilte in Umfangsrichtung U hintereinander angeordnete Querrillen 13, die sich jeweils axial ausgehend von der Profilrippe 4 nach axial außen über die axiale Erstreckung der Profilblockreihe 5 und die axiale Erstreckung der Schulterprofilblockreihe 6 bis in die rechte Schulter hinein erstrecken. Dabei trennt jede der Querrillen 13 im Bereich der Profilblockreihe 5 jeweils zwei in Umfangsrichtung U hintereinander angeordnete Profilblockelemente 35 und im Bereich der Schulterprofilblockreihe 6 jeweils zwei in Umfangsrichtung U hintereinander angeordnete Profilblockelemente 36 voneinander. Die Querrillen 12 und 13 sind in ihrem axial inneren zur Äquatorebene hin weisenden Erstreckungsbereich nahe der jeweils benachbarten Profilrippe 3 bzw. 4 mit einer von axial innen von der Äquatorebene nach axial außen gesehenen Steigung zur Axialen ausgebildet, deren Umfangskomponente längs der axialen Erstreckung der Querrillen 12 bzw. 13 jeweils von axial innen nach axial außen bis zum Rand der axialen Erstreckung der Bodenaufstandsfläche TA hin kontinuierlich abnimmt.

Zwischen zwei in Umfangsrichtung U hintereinander angeordneten Querrille 12 sind die jeweils ein Profilblockelement 31 der Schulterprofilblockreihe 1 und ein Profilblockelement 32 der Profilblockreihe 2 axial durch eine die beiden Querrillen 12 verbindende geradlinig verlaufende Profilrille 7 voneinander getrennt. Das Profilblockelement 32 ist von der Profilblockrippe 3 durch eine gezackt verlaufende Profilrille 8 axial getrennt. Zwischen zwei in Umfangsrichtung U hintereinander angeordneten Querrillen 13 ist jeweils ein Profilblockelement 35 der Profilblockreihe 5 und ein Profilblockelement 36 der Schulterprofilblockreihe 6 axial durch eine die beiden Querrillen 13 verbindende geradlinig verlaufende Profilrille 11 getrennt. Das Profilblockelement 35 ist von der Profilrippe 4 durch eine gezackt verlaufende Profilrille 10 axial getrennt.

Die die zur linken Schulter hin weisende Flanke 23 der Profilrippe 3 und die zur rechten Schulter hin weisende Flanke 24 der Profilrippe 4 sind in Umfangsrichtung U gesehen v-förmig von axial innen nach außen auseinander laufend ausgebildet, wobei jeweils innerhalb des in Umfangsrichtung U verlaufenden Erstreckungsbereich der nach axial innen weisenden Flanke 25 der Profilblockelemente 32 die zur linken Schulter hin weisende Flanke 23 der Profilrippe 3 und jeweils innerhalb des in Umfangsrichtung U verlaufenden Erstreckungsbereichs der nach axial innen weisenden Flanke 26 der Profilblockelemente 35 der Profilreihe 5 die zur rechten Schulter hin weisende Flanke 24 der Profilrippe 4 einen kurzen Umfangsabschnitt mit axial nach innen gerichteten Versatz 27 bzw. 28 mit axial nach innen gerichteter Steigungskomponente aufweist. Korrespondierend zu der hierdurch bedingten Zick-Zack-Form der nach axial außen weisende Flanke 23 der Profilrippe 3 bzw. der nach axial außen weisende Flanke 24 der Profilrippe 4 ist jeweils die nach axial innen gerichtete Flanke 25 der Profilblockelemente 32 bzw. die nach axial innen gerichtete Flanke 26 der Profilblockelemente 35 gezackt ausgebildet, wobei - wie in Fig. 1 zu erkennen ist - in dem in Abrollrichtung F hinter dem Versatz 27 bzw. 28 ausgebildeten Erstreckungsbereich der Profilrille 8 bzw. der Profilrille 10 die Profilrille 8 bzw. die Profilrille 10 jeweils mit einer kleineren jeweils quer zur Erstreckungsrichtung der Profilrille 8 bzw. der Profilrille 10 gemessenen Rillenbreite als in dem in hinter der Position des Versatzes ausgebildeten Erstreckungsbereich.

Die Profilrillen 7 und die Profilrillen 11 sind in ihrem Neigungsverlauf zur Axialen A derart ausgebildet, dass die Profilrillen 7 und 11 in Abrollrichtung F gesehen einen V-förmigen axial auseinander laufenden Rillenverlauf aufweisen.

Wie dargelegt, ist in Fig. 1 dargestellte Ausführungsbeispiel eines Laufstreifenprofils ein symmetrisches Profil. Die weitere Erläuterung beschränkt sich daher auf die Beschreibung der in Fig. 1 rechts der Äquatorialebene dargestellten Profilhälfte.

Die Profilrillen 11 weisen im radial äußeren Erstreckungsbereich der Profilblockelemente 35 und 36 über ihre gesamte Erstreckung längs ihrer Haupterstreckungsrichtung jeweils einen geradlinigen Verlauf ihrer Rillenflanken und ebenso einen geradlinigen Verlauf des Rillengrundes auf und sind längs ihrer Haupterstreckung mit einer Rillentiefe t ausgebildet, wobei die Rillentiefe t jeweils das maximale Maß der radialen Erstreckung von der radial äußeren Oberfläche der Profilblockelemente 35 und 36 in radialer Richtung nach innen bis zum Rillengrund darstellt. Die Profilblockelemente 36 weisen aufgrund in Abrollrichtung F von axial innen nach axial außen gesehenen Neigung der Profilrille 11 ausgehend von einem maximalen Maß c ihrer axialen Erstreckung bis zum axial äußeren Rand der Breite der Bodenaufstandsfläche TA einen kontinuierlich abnehmenden axialen Erstreckungsbereich ihrer axialen Breite bis zum axial äußeren Rand der Breite der Bodenaufstandsfläche TA auf, die an dem in Abrollrichtung F gesehenen Ende der Profilrille 11 nur noch ein Maß b ihrer axialen Breite bis zum axial äußeren Rand der Breite der Bodenaufstandsfläche TA beträgt, mit b < c. In der Profilrille 11 mit einer Gesamterstreckungslänge p längs ihrer Haupterstreckungsrichtung ist längs ihrer Haupterstreckungsrichtung in einem in Abrollrichtung F der Profilrille 11 gesehenen Enderstreckungsabschnitt mit einer Erstreckungslänge q mit (0,2 p) ≤ q ≤ (0,75 p) jeweils am Profilblockelement 36 im radial inneren Erstreckungsbereichbereich der Profilrille 11 eine Versteifungsstufe 21 ausgebildet, die sich jeweils quer zur Haupterstreckungsrichtung der Profilrille 11 gesehen bis in einen Abstand a zur Flanke des axial benachbarten Profilblockelements 31 erstreckt, wobei für a gilt: a > 0. Der Abstand a ist so gewählt, dass für ihn gilt: 0,3mm ≤ a ≤ 20mm. In einer besonderen Ausführung ist a derart gewählt, dass für a gilt: 0,4mm ≤ a ≤ 7mm. Im dargestellten Beispiel gilt a = 1,2mm.

Die Versteifungsstufe 21 erstreckt sich dabei - wie in Fig. 3 dargestellt - jeweils ausgehend vom Rillengrund nach radial außen bis in eine radiale Höhe h, wobei für h gilt: (0,1 tₘ) ≤ h ≤ (0,8 tₘ). In einer besonderen Ausführung gilt (0,2 tₘ) ≤ h ≤ (0,5 tₘ), wobei tₘ die durchschnittlich radiale maximale Rillentiefe t längs der Erstreckung der Rille in deren Haupterstreckungsrichtung im Erstreckungsbereich der Profilrille außerhalb des ersten Abschnittes bei dem Fahrzeugreifen im montierten Normzustand nach E.T.R.T.O - Standard darstellt.

Der Querschnitt der Versteifungsstufe 21 ist in Fig. 3 dargestellt. Dabei ist zu erkennen, dass die Versteifungsstufe 21 an ihrer radial äußeren Oberfläche ein Plateau aufweist.

Analog zur Versteifungsstufe 21 in der Rille 11 ist - wie in den Fig. 1 und 3 dargestellt - auch in der Rille 10 am Profilblockelement 35 jeweils eine Versteifungsstufe 20 ausgebildet. Die Versteifungsstufe 20 ist jeweils in dem axialen Erstreckungsbereich der Rille 10 ausgebildet, der sich zwischen der korrespondierend zum Versatz 28 der Flanke 24 der Profilrippe 4 ausgebildeten Versatz der Flanke 26 des Profilblockelements 35 und der in Abrollrichtung F dem Versatz nachgeordneten Querrille 13 erstreckt. In diesem Erstreckungsbereich der Rille 10 ist die Rille mit einer in der radial äußeren Oberfläche der Profilrippe 4 und des Profilblockelements 35 senkrecht zur Haupterstreckungsrichtung der Rille gemessenen Rillenbreite e ausgebildet. Die Versteifungsstufe 20 erstreckt sich jeweils quer zur Haupterstreckungsrichtung der Profilrille 10 gesehen bis in einen Abstand a zur Flanke 24 der axial benachbarten Profilrippe 4, wobei für a gilt: a > 0. Der Abstand a ist so gewählt, dass für ihn gilt: 0,3mm ≤ a ≤ 20mm. In einer besonderen Ausführung ist a derart gewählt, dass für a gilt: 0,4mm ≤ a ≤ 7mm. Im dargestellten Beispiel gilt a = 0,8mm. Längs dieses Erstreckungsbereichs der Rille 10 ist die Rille zwischen der im axialen Erstreckungsbereich des Profilblockelements 35 mit noch relativ großer Umfangsrichtungskomponente ausgebildeten Querrille 13 und der Rille 10 mit einer kleineren gemittelten axialen Erstreckung (in axialer Richtung A des Fahrzeugluftreifens) des Profilblockelements 35 ausgebildet, als in dem in Abrollrichtung F dem Versatz der Flanke 26 des Profilblockelementes 35 vorgeordneten Erstreckungsbereich.

Wie in den Figuren 1 und 4 dargestellt ist, ist darüber hinaus in dem an den axial inneren Endverlauf der Querrille 13 anschließenden in Abrollrichtung F dem Versatz 28 der Flanke 24 der Profilrippe 4 jeweils vorgeordneten Erstreckungsabschnitt der Rille 10 eine Versteifungsstufe 22 an die Flanke 24 der Profilrippe 4 im Bereich des Versatzes 28 ausgebildet, die sich quer zur Haupterstreckungsrichtung der Profilrille 10 gesehen bis in einen Abstand a zur Flanke 26 des axial benachbarten Profilblockelementes 35 erstreckt, wobei für a gilt: a > 0. Der Abstand a ist so gewählt, dass für ihn gilt: 0,3mm < a < 20mm. In einer besonderen Ausführung ist a derart gewählt, dass für a gilt: 0,4mm < a < 7mm. Im dargestellten Beispiel gilt a = 0,8mm. Wie in Fig. 4 zu erkennen ist, erstreckt sich die Versteifungsstufe 22 vom Versatz 28 auch in Erstreckungsrichtung der Rille 10 in Richtung der Profilrille 13 über eine Erstreckungslänge d. wobei für d gilt: d > 0 um dann über eine rampenförmige Absenkung in den Rillengrund der Rille 10 überzugehen. Die Erstreckungslänge d ist derart gewählt, dass für d gilt: (0,2 e) ≤ d ≤ (2 e), wobei e - wie oben beschrieben - die Rillenbreite der Rille 10 in der radial äußeren Oberfläche der Profilrippe 4 und des Profilblockelements 35 in dem in Abrollrichtung F dem Versatz 28 nachgeordneten Erstreckungsabschnitt der Rille ist.

### Bezugszeichenliste

(Teil der Beschreibung)
- 1: Schulterprofilblockreihe
- 2: Profilblockreihe
- 3: Profilrippe
- 4: Profilrippe
- 5: Profilblockreihe
- 6: Schulterprofilblockreihe
- 7: Profilrille
- 8: Profilrille
- 9: Umfangsprofilrille
- 10: Profilrille
- 11: Profilrille
- 12: Querrille
- 13: Querrille
- 14: Feineinschnitt
- 15: Feineinschnitt
- 16: Feineinschnitt
- 17: Feineinschnitt
- 18: Feineinschnitt
- 19: Feineinschnitt
- 20: Versteifungsstufe
- 21: Versteifungsstufe
- 22: Versteifungsstufe
- 23: Flanke
- 24: Flanke
- 25: Flanke
- 26: Flanke
- 27: Versatz
- 28: Versatz
- 31: Profilblockelement
- 32: Profilblockelement
- 35: Profilblockelement
- 36: Profilblockelement

## Patentansprüche

1. Laufflächenprofil eines Fahrzeugreifens - insbesondere eines Fahrzeugluftreifens - mit zwei benachbarten durch eine Profilrille (7,8,10,11) voneinander beabstandeten radial erhabenen Profilelementen (31,32,35,36) mit längs der Erstreckungsrichtung der die erhabenen Profilelemente trennenden Profilrille in Richtung quer zur Profilrille (7,8,10,11) unterschiedlich ausgebildeter Quersteifigkeitsverteilung eines ersten der beiden Profilelemente mit wenigstens einem ersten Abschnitt des Erstreckungsbereichs des Profilelements längs der Erstreckungsrichtung der Profilrille (7,8,10,11) und mit wenigstens einem zweiten Abschnitt des Erstreckungsbereichs des Profilelements längs der Erstreckungsrichtung der Profilrille, wobei die Quersteifigkeit des Profilelements im ersten Abschnitt geringer ist als im zweiten Abschnitt,
wobei lediglich längs des ersten Abschnitts der beiden Abschnitte dieses ersten Profilelementes im radial inneren Erstreckungsbereich der Profilrille ein stufenförmiger Absatz (20,21,22) ausgehend von dem ersten Profilelement quer zur Erstreckungsrichtung der Profilrille (7,8,10,11) ausgebildet ist, der sich zur Versteifung in Richtung des zweiten Profilelementes in die Profilrille (7,8,10,11) erstreckt und in einem Abstand a mit a > 0 vom zweiten Profilelement in der Profilrille endet.

2. Laufflächenprofil gemäß den Merkmalen von Anspruch 1,
wobei die Profilrille (7,8,10,11) eine Profilrille mit einer Haupterstreckungsrichtung ist, deren Richtungskomponente in Umfangsrichtung (U) des Fahrzeugreifens größer als deren Richtungskomponente in axialer Richtung (A) des Fahrzeugreifens ist.

3. Laufflächenprofil gemäß den Merkmalen von Anspruch 1 oder 2,
wobei wenigstens das erste erhabene Profilelement ein Profilblockelement (31,32,35,36) ist.

4. Laufflächenprofil gemäß den Merkmalen von einem oder mehreren der vorangegangenen Ansprüche,
wobei wenigstens das erste erhabene Profilelement ein Profilblockelement einer über den Umfang (U) des Fahrzeugreifens erstreckten Profilblockreihe (1,2,5,6) ist.

5. Laufflächenprofil gemäß den Merkmalen von einem oder mehreren der vorangegangenen Ansprüche,
wobei die Profilrille über den Umfang (U) des Fahrzeugreifens erstreckte Umfangsrille (9) ist.

6. Laufflächenprofil gemäß den Merkmalen von einem oder mehreren der vorangegangenen Ansprüche,
das als Winterreifenprofil ausgebildet ist.

7. Laufflächenprofil gemäß den Merkmalen von einem oder mehreren der vorangegangenen Ansprüche,
wobei das erste - und insbesondere auch das zweite - erhabene Profilelement an seiner radial äußeren Oberfläche mit einem oder mehreren Feineinschnitten (14-19) ausgebildet ist.

8. Laufflächenprofil gemäß den Merkmalen von einem oder mehreren der vorangegangenen Ansprüche,
wobei der stufenförmige Absatz (20,21,22) sich ausgehend vom Rillengrund nach radial außen bis in eine radiale Höhe h erstreckt, für die gilt: (0,1 tₘ) ≤ h ≤ (0,8 tₘ ), insbesondere (0,2 tₘ ) ≤ h ≤ (0,5 tₘ), wobei tₘ die durchschnittlich radiale maximale Rillentiefe t längs der Erstreckung der Profilrille in deren Haupterstreckungsrichtung im Erstreckungsbereich der Profilrille außerhalb des ersten Abschnittes bei dem Fahrzeugreifen im montierten Normzustand nach E.T.R.T.O - Standard darstellt.

9. Laufflächenprofil gemäß den Merkmalen von einem oder mehreren der vorangegangenen Ansprüche,
wobei für den Abstand a gilt: 0,3mm ≤ a ≤ 20mm,
insbesondere 0,4mm ≤ a ≤ 7mm.

10. Laufflächenprofil gemäß den Merkmalen von einem oder mehreren der vorangegangenen Ansprüche,
wobei der stufenförmige Absatz (20, 21, 22) ausgehend von seiner nach radial außen gerichteten, ein Plateau bildenden Oberfläche rampenförmig in längs der Haupterstreckungsrichtung der Profilrille in den Rillengrund abfällt, wobei sich der stufenförmige Absatz (20,21,22) auch längs des rampenförmig abfallenden Erstreckungsbereichs in Richtung des zweiten Profilelementes in die Profilrille erstreckt und in einem Abstand a mit a > 0 vom zweiten Profilelement in der Profilrille endet.

11. Laufflächenprofil gemäß den Merkmalen von einem oder mehreren der vorangegangenen Ansprüche,
wobei der stufenförmige Absatz (20,21,22) ausgehend von seiner nach radial außen gerichteten, ein Plateau bildenden Oberfläche rampenförmig quer zur Haupterstreckungsrichtung der Profilrille in den Rillengrund abfällt, und in einem Abstand a mit a > 0 vom zweiten Profilelement in Grund der Profilrille endet.

12. Laufflächenprofil gemäß den Merkmalen von einem oder mehreren der vorangegangenen Ansprüche,
mit einem längs der Erstreckung des stufenförmigen Absatzes (20,21,22) verändert ausgebildeten Abstand a zum zweiten Profilelement.

## Claims

1. Tread profile of a vehicle tyre - in particular a pneumatic vehicle tyre - with two adjacent, radially raised profile elements (31, 32, 35, 36), which are spaced apart from one another by a profile groove (7, 8, 10, 11), with transverse stiffness distribution of a first of the two profile elements that is formed differently in the direction transverse to the profile groove (7, 8, 10, 11) along the direction of extent of the profile groove separating the raised profile elements, comprising at least a first portion of the range of extent of the profile element along the direction of extent of the profile groove (7, 8, 10, 11) and comprising at least a second portion of the range of extent of the profile element along the direction of extent of the profile groove, the transverse stiffness of the profile element in the first portion being less than in the second portion,
wherein merely along the first portion of the two portions of this first profile element there is formed in the radially inner range of extent of the profile groove a step-shaped offset (20, 21, 22), which comes from the first profile element transversely in relation to the direction of extent of the profile groove (7, 8, 10, 11), extends into the profile groove (7, 8, 10, 11), to provide stiffening in the direction of the second profile element, and ends at a distance a from the second profile element in the profile groove with a > 0.

2. Tread profile according to the features of Claim 1, wherein the profile groove (7, 8, 10, 11) is a profile groove with a main direction of extent, the directional component of which in the circumferential direction (U) of the vehicle tyre is greater than the directional component thereof in the axial direction (A) of the vehicle tyre.

3. Tread profile according to the features of Claim 1 or 2,
wherein at least the first raised profile element is a profile block element (31, 32, 35, 36).

4. Tread profile according to the features of one or more of the preceding claims,
wherein at least the first raised profile element is a profile block element of a row of profile blocks (1, 2, 5, 6) made to extend over the circumference (U) of the vehicle tyre.

5. Tread profile according to the features of one or more of the preceding claims,
wherein the profile groove is a circumferential groove (9) made to extend over the circumference (U) of the vehicle tyre.

6. Tread profile according to the features of one or more of the preceding claims,
which is formed as a winter tyre profile.

7. Tread profile according to the features of one or more of the preceding claims,
wherein the first - and particularly also the second - raised profile element is formed on its radially outer surface with one or more sipes (14-19).

8. Tread profile according to the features of one or more of the preceding claims,
wherein the step-shaped offset (20, 21, 22) extends from the groove base radially outwards to a radial height h, for which: (0.1 tₘ) ≤ h ≤ (0.8 tₘ), in particular (0.2 2 tₘ) ≤ h ≤ (0.5 5 tₘ), where tₘ is the average radial maximum groove depth t along the extent of the profile groove in the main direction of extent thereof in the range of extent of the profile groove outside the first portion in the case of the vehicle tyre in the fitted state as specified by the E.T.R.T.O standard.

9. Tread profile according to the features of one or more of the preceding claims,
wherein the following applies for the distance a: 0.3 mm ≤ a ≤ 20 mm, in particular 0.4 mm ≤ a ≤ 7 mm.

10. Tread profile according to the features of one or more of the preceding claims,
wherein the step-shaped offset (20, 21, 22) descends from its radially outwardly directed surface, forming a plateau, in the form of a ramp into the groove base along the main direction of extent of the profile groove, the step-shaped offset (20, 21, 22) also extending along the range of extent that descends in the form of a ramp in the direction of the second profile element into the profile groove and ending at a distance a from the second profile element in the profile groove with a > 0.

11. Tread profile according to the features of one or more of the preceding claims,
wherein the step-shaped offset (20, 21, 22) descends from its radially outwardly directed surface, forming a plateau, in the form of a ramp transversely in relation to the main direction of extent of the profile groove into the groove base, and ends at a distance a from the second profile element in the base of the profile groove with a > 0.

12. Tread profile according to the features of one or more of the preceding claims,
with a distance a from the second profile element formed such that it changes along the extent of the step-shaped offset (20, 21, 22).

## Revendications

1. Profil de surface de roulement d'un bandage pour roue de véhicule et en particulier d'un bandage pneumatique pour roue de véhicule, présentant
deux éléments profilés (31, 32, 35, 36) voisins, débordant radialement et séparés les uns des autres par une rainure profilée (7, 8, 10, 11),
avec le long de la direction d'extension de la rainure profilée qui sépare les éléments profilés en relief, dans la direction transversale par rapport à la rainure profilée (7, 8, 10, 11), une répartition variable de la rigidité transversale d'un premier des deux éléments profilés,
avec au moins une première partie de la zone d'extension de l'élément profilé dans la direction d'extension de la rainure profilée (7, 8, 10, 11) et au moins une deuxième partie de la zone d'extension de l'élément profilé dans la direction d'extension de la rainure profilée,
la rigidité transversale de l'élément profilé de la première partie étant plus basse que dans la deuxième partie,
un talon (20, 21, 22) en gradin étant formé uniquement le long de la première des deux parties de ce premier élément profilé dans la direction d'extension radialement intérieure de la rainure profilée à partir du premier élément profilé et transversalement par rapport à la direction d'extension de la rainure profilée (7, 8, 10, 11), ce talon s'étendant dans la rainure profilée (7, 8, 10, 11) pour assurer le renfort dans la direction du deuxième élément profilé et se terminant dans la rainure profilée à une distance a, a > 0, du deuxième élément profilé.

2. Profil de surface de roulement selon les caractéristiques de la revendication 1, dans lequel la rainure profilée (7, 8, 10, 11) est une rainure profilée qui présente une direction d'extension principale dont la composante de direction dans le sens de la périphérie (U) du bandage pour roue de véhicule est plus grande que sa composante de direction dans la direction axiale (A) du bandage pour roue de véhicule.

3. Profil de surface de roulement selon les caractéristiques de la revendication 1 ou 2, dans lequel au moins le premier élément profilé en relief est un élément en bloc profilé (31, 32, 35, 36).

4. Profil de surface de roulement selon les caractéristiques d'une ou plusieurs des revendications précédentes, dans lequel au moins le premier élément profilé en relief est un élément en bloc profilé d'une rangée (1, 2, 5, 6) de blocs profilés qui s'étend à la périphérie (U) du bandage pour roue de véhicule.

5. Profil de surface de roulement dans lequel la rainure profilée est une rainure périphérique (9) qui s'étend à la périphérie (U) du bandage pour roue de véhicule.

6. Profil de surface de roulement en ce qu'il est configuré comme profilé pour bandage de roue hiver.

7. Profil de surface de roulement dans lequel le premier élément profilé en relief et en particulier également le deuxième présentent une ou plusieurs fines entailles (14-19) sur leur surface radialement extérieure.

8. Profil de surface de roulement dans lequel le talon (20, 21, 22) en gradin, partant du fond de la rainure, s'étend radialement vers l'extérieur jusqu'à une hauteur radiale h qui vérifie la relation (0,1 tₘ) ≤ h ≤ (0,8 tₘ) et en particulier la relation (0,2 tₘ) ≤ h ≤ (0,5 tₘ), tₘ étant la profondeur maximale radiale moyenne t de la rainure le long de l'extension de la rainure profilée dans sa direction d'extension principale dans la zone d'extension de la rainure profilée située à l'extérieur de la première partie dans le bandage pour roue de véhicule à l'état monté normalisé selon la norme E.T.R.T.O.

9. Profil de surface de roulement dans lequel la distance a vérifie la relation : 0,3 mm ≤ a ≤ 20 mm et en particulier la relation 0,4 mm ≤ a ≤ 7 mm.

10. Profil de surface de roulement dans lequel le talon (20, 21, 22) en forme de gradin, partant de sa surface orientée radialement vers l'extérieur et formant un plateau, diminue en pente dans la direction d'extension principale de la rainure profilée jusque dans le fond de la rainure, le talon (20, 21, 22) en forme de gradin s'étendant dans la zone d'extension diminuant en forme de pente en direction du deuxième élément profilé jusque dans la rainure profilée et se terminant dans la rainure profilée à une distance a, a > 0, du deuxième élément profilé.

11. Profil de surface de roulement dans lequel le talon (20, 21, 22) en forme de gradin, partant de sa surface orientée radialement vers l'extérieur et formant un plateau, diminue en pente dans la direction d'extension principale de la rainure profilée jusque dans le fond de la rainure et se termine à la base de la rainure profilée à une distance a, a > 0, du deuxième élément profilé.

12. Profil de surface de roulement dans lequel la distance a par rapport au deuxième élément profilé varie le long de l'extension du talon (20, 21, 22) en forme de gradin.
